# EUROPÄISCHE PATENTANMELDUNG

(11) **EP 0 821 514 A1**
(43) Veröffentlichungstag der Anmeldung: **28.01.1998**
(21) Anmeldenummer: 96440058.4
(22) Anmeldetag: 26.07.1996
(51) Int. Cl.: H04M 11/04

(54) **Vorrichtung zur Aufnahme und zur Übertragung eines Alarms**

(71) Anmelder: ALCATEL ALSTHOM COMPAGNIE GENERALE D'ELECTRICITE, 75008 Paris (FR)
(72) Erfinder: Lecomte, Daniel, 75116 Paris (FR)
(74) Vertreter: Knecht, Ulrich Karl, Dipl.-Ing.

(57) **Zusammenfassung**

Schaffe eine Vorrichtung zur Aufnahme und zur Übertragung eines Alarmes, welche kostengünstig zu realisieren ist und welche aussagefähige Alarmdaten derart versendet, daß eine hohe Wahrscheinlichkeit gegeben ist, daß diese auch empfangen werden.

Eine Vorrichtung (1) zur Aufnahme und zur Übertragung eines Alarmes sendet im Falle eines detektierten Alarmes ein Alarmsignal mit zusätzlichen Informationen aus. Das Alarmsignal mit den zusätzlichen Informationen wird in eine Text- oder Sprachnachricht umgewandelt und dann zu entsprechenden Empfängern übertragen.

## Beschreibung

Die Erfindung betrifft eine Vorrichtung zur Aufnahme und zur Übertragung eines Alarmes, wie z. B. eines Feueralarmes oder Einbruchalarmes über ein Übertragungsnetz.

Aus dem Stand der Technik ist das System des sogenannten TeleNachbarn bekannt. Hinter dem System TeleNachbar verbirgt sich ein System, in dem ein handelsüblicher Sensor vorgesehen ist, der ein unerwünschtes Vorkommnis, z. B. in einem Privathaus, registriert. Weiter wird eine Zieltaste eines Telefons aktiviert, welches eine vorher verabredete Rufnummer eines TeleNachbarn anwählt. Der Nachbar erkennt die Rufnummer seines anrufenden Nachbarn, wird bei Abheben durch einen speziellen Signalton auf etwas Außergewöhnliches aufmerksam gemacht und kann durch das gleichzeitig eingeschaltete Telefonmikrofon beim signalauslösenden Teilnehmer in das Haus bzw. die Wohnung seines Nachbarn 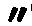 hineinhören". Die Realisierung kann mit einem ISDN-Telefon leicht aktiviert werden. Über eine V.24-Schnittstelle wird ein handelsüblicher Sensor angeschlossen. Die Aktivierung erfolgt durch wenige menügeführte Befehle. Prinzipiell läßt sich dieses Szenario auch ohne ISDN realisieren. Um eine erhöhte Sicherheit in der Überwachung zu gewährleisten, kann auch eine Bildübertragung vorgenommen werden. Dazu wird bei dem zu überwachenden Nachbar eine Objektkamera oder eine beliebige andere Kamera installiert, die wiederum über ein Telefon und das öffentliche Netz mit dem überwachenden Nachbarn verbunden ist. Bei Auslösung eines Alarmes kann der Nachbar in das zu überwachende Haus hineinsehen und direkt feststellen, was Grund des Alarmauslösens war oder welche Hilfsorganisation, z. B. die Polizei oder die Feuerwehr, gerufen werden muß.

Nachteilig bei dem aus der Stand der Technik gekennzeichneten System ist, daß in dem Fall, daß die Leitung zu dem Nachbarn besetzt ist, kein Alarm ausgelöst werden kann. Zwar könnte ein erneuter Anruf gestartet werden, um den überwachenden Nachbarn dennoch zu alarmieren, aber auch dieses ist nur bedingt möglich. Auch kann es vorkommen, daß der zu überwachende Nachbar nicht zuhause ist und deshalb nicht in der Lage ist, einen Alarm direkt entgegenzunehmen.

Allgemein bekannt sind sehr komplexe Überwachungssysteme, bei denen eine Zentrale eingeschaltet ist. Hierbei wird über eine Zentrale, ein Gebäude oder ein Gelände, mittels Überwachungskameras überwacht. Bei einem solchen System fallen sehr hohe Kosten an.

Aufgabe der vorliegenden Endung ist es, eine Vorrichtung zur Aufnahme und zur Übertragung eines Alarmes zu schaffen, welche kostengünstig zu realisieren ist, und bei der gewährleistet ist, daß ein Alarm schnellstmöglich ausgesendet wird und bei dem eine leichte Ortung des alarmauslösenden Ereignisses möglich ist.

Dies wird erfindungsgemäß gelöst durch die Lehre des Patentanspruchs 1.

Vorteilhaft erweist sich hierbei, daß ein alarmauslösendes Signal in unterschiedlichen Formaten über ein Übertragungsnetz zu einem vorbestimmten oder zu einem nichtvorbestimmten Empfänger gesendet wird. Ein solcher kann entsprechend der Vorrichtung, die bei ihm vorhanden ist, sofort eine Gegenmaßnahme einleiten. Weiterhin vorteilhaft ist, daß mit einer solchen Vorrichtung zur Aufnahme und zur Übertragung eines Alarmes eine kostengünstige, für jedermann erschwingliche Vorrichtung geschaffen ist, die es ermöglicht, Räume, Häuser oder Gebäude zu überwachen. Weder sind aufwendige Installationen notwendig, noch sind teure Zusatzgeräte anzuschaffen.

Weitere vorteilhafte Ausgestaltungen sind den Unteransprüchen 2 bis 6 zu entnehmen.

Ein besonderer Vorteil ergibt sich unter Anspruch 2, bei dem zu dem Alarmsignal Informationen über Datum und Uhrzeit sowie Ort oder Dauer und Art des erkannten aufgenommenen Alarmes beigefügt werden. Hierdurch wird ein Empfänger des Alarmes genauestens über diesen informiert und ist in der Lage, rechtzeitig Gegenmaßnahmen einzuleiten. Ebenfalls vorteilhaft ergibt sich aus den Unteransprüchen, daß z. B. ein Alarmsignal über einen Pager oder über ein schnurloses Telefon oder über ein normales Datenverarbeitungs-Endgerät empfangen werden kann. Hierdurch wird ein Benutzer der erfindungsgemäßen Vorrichtung in die Lage versetzt, z. B. aus seiner eigenen Wohnung selbst einen Alarm zu empfangen und gegegenenfalls Gegenmaßnahmen einzuleiten.

Im folgenden wird die Erfindung anhand eines Ausführungsbeispiels und anhand der Figuren näher erläutert. Folgende Figur zeigt:
- Figur (1):: Schematische Darstellung einer erfindungsgemäßen Vorrichtung.
- Figur (2):: Schematische Darstellung eines Alarmsystems.

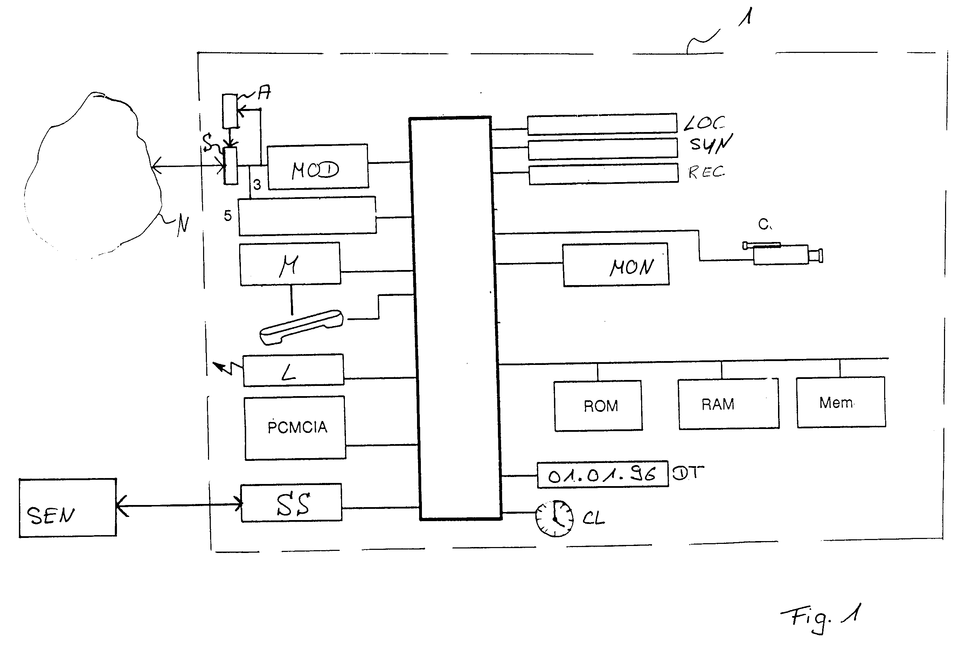

Im folgenden wird anhand der Figur 1 und eines Ausführungsbeispiels dazu die Erfindung näher erläutert. Eine Vorrichtung 1 zur Aufnahme und zur Übertragung eines Alarmes über ein Übertragungsnetz N weist eine Schnittstelle S zum Anschließen von Mitteln SEN zur Erkennung und Aufnahme des Alarmes auf. Mittels dieser Schnittstelle SS wird ein erkannter Alarm in ein Alarmsignal umgewandelt. Desweiteren weist die Vorrichtung 1 Mittel CL, DT, LOC zum Beifügen von Informationen zu dem Alarmsignal auf. Ein Mittel zum Beifügen von Informationen kann beispielsweise eine Uhr CL sein. Mittels dieser wird die genaue Uhrzeit des erkannten Alarmes aufgenommen, dem Alarmsignal beigefügt und mit diesem zusammen übertragen. Eine weitere Möglichkeit des Mittels zum Beifügen von Informationen ist z. B. eine zusätzliche Datumseingabe DT oder aber das Hinzufügen einer detaillierten Angabe des Ortes, an dem ein Alarm detektiert wurde. Dies kann beispielsweise mit zusätzlichen Mitteln LOC beigefügt werden, die die Information über den Standort der Vorrichtung enthalten. Weiter enthält die Vorrichtung 1 zur Aufnahme und zur Übertragung eines Alarms Mittel SYN, REC zum Umwandeln des Alarmsignals mit der zusätzlichen Information in eine Sprachnachricht oder in eine Textnachricht. Hierbei dient das Mittel SYN zum Generieren einer Sprachnachricht und das andere Mittel REC zum Generieren einer Textnachricht. Zusätzlich existieren in der Vorrichtung 1 zur Aufnahme und zur Übertragung des Alarms Mittel A zum Ausgeben der Sprach- oder Textnachricht über das Übertragungsnetz N zu einem Empfänger.

Demgemäß liegen sowohl Sprach- als auch Textnachrichten an dem Mittel A zum Ausgeben an. Das bedeutet aber, daß Nachrichten unterschiedlicher Formate von der Vorrichtung 1 ausgegeben werden müssen. Hierzu weist die Vorrichtung 1 zur Aufnahme und Übertragung eines Alarmes weiterhin eine Schnittstelle SS zur Anpassung der Vorrichtung an das Übertragungsnetz N auf. Diese Schnittstelle SS dient dazu, z. B. Sprachnachrichten auszugeben. Für den Fall, daß eine Textnachricht über das Nachrichtenübertragungsnetz N zu einem Empfänger übertragen werden soll, wird ein vorgeschaltetes Modem MOD verwendet.

In einer Ausgestaltung der Erfindung kann bei Auslösung eines Alarmes sowohl eine Sprachnachricht als auch eine Textnachricht über den gleichen Alarm generiert werden und an unterschiedliche Empfänger gesendet werden. Dies bedeutet beispielsweise, daß ein Empfänger z. B. über einen Pager informiert wird, indem ein Ruf direkt über das Übertragungsnetz N an den Pager abgesetzt wird. Weiterhin wird eine Textnachricht erstellt, die an einen z. B. im Büro befindlichen PC gesendet wird. Daraus ergibt sich, daß die Wahrscheinlichkeit, daß der Empfänger das Alarmsignal mit der zusätzlichen Information wirklich empfängt, viel höher ist.

In der Vorrichtung 1 zur Aufnahme und zur Übertragung eines Alarms befinden sich weiterhin Speicherelemente ROM, RAM, Mem. Diese Speicher dienen z. B. dazu, einen Mikrocontroller µC mit den wesentlichen Programmen zu versorgen, dazu dient beispielsweise das Speicherelement ROM. Ein weiterer Speicher, der Mem-Speicher, dient zur Speicherung von aufgenommenen Nachrichten. Auch können diese Speicher zur Zwischenspeicherung verwendet werden, um Nachrichten zu einem späteren Zeitpunkt nochmals auszugeben. Der bereits erwähnte Mikrocontroller µC stellt die Logik der Vorrichtung 1 zur Aufnahme und zur Übertragung eines Alarmes dar.

Die Vorrichtung 1 zur Aufnahme und zur Übertragung eines Alarmes über ein Übertragungsnetz N soll desweiteren in der Lage sein, herkömmliche Telefonfunktionen auszuführen. Hierzu ist die Vorrichtung 1 zur Aufnahme und zur Übertragung eines Alarmes mit einem Lautsprecher L und einem Mikrofon M ausgestattet. Vorzugsweise ist dieses in Form eines Hörers ausgestaltet. Um weitere Funktionen in die Vorrichtung zur Aufnahme und zur Übertragung eines Alarmes zu implementieren, befindet sich eine PCMCIA-Einsteckvorrichtung in der Vorrichtung 1. Über diese kann eine PCMCIA-Karte eingeführt werden, um zusätzliche Programme in die Vorrichtung 1 zur Aufnahme und zur Übertragung eines Alarmes zu laden.

In einer weiteren Ausgestaltung ist die Vorrichtung 1 zur Aufnahme und zur Übertragung eines Alarmes mit einer Kamera C zu sehen. Diese Kamera ist beispielsweise als Zusatzgerät ausgestaltet und wird über ein Kabel mit der Vorrichtung 1 verbunden. Die Kamera kann beispielsweise in einem Haus aufgestellt werden, in Bereitschaft geschaltet werden und für den Fall, daß eine Änderung im Bild auftritt, ein Signal erzeugen.

Die bereits zuvor beschriebenen Mittel SEN zur Erkennung und Aufnahme eines Alarmes können beispielsweise herkömmliche Rauchsensoren sein, oder aber Wassersensoren, oder aber Feuersensoren, oder aber Bewegungssensoren oder jede erdenkliche Art von Sensoren, die zur Erzeugung eines Alarmsignals dienen.

Die zuvor beschriebenen Textnachrichten, die über die Schnittstelle S an das Nachrichtennetz und zu einem Empfänger übermittelt werden, können beispielsweise Nachrichten in Form von E-Mails sein.

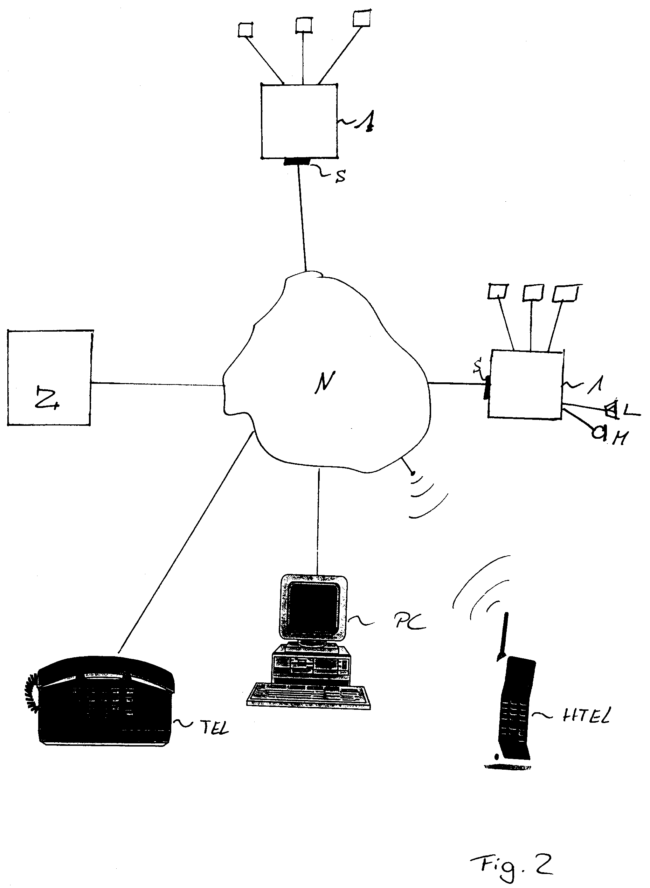

Im folgenden wird die Erfindung anhand von Figur 2 näher erläutert. Figur 2 zeigt ein System zur Aufnahme eines Alarmes und zur Generierung eines Alarmes.

Das System zur Aufnahme eines Alarmes und zur Generierung eines Alarmes besteht aus mindestens einer Vorrichtung 1 gemäß der zuvor erläuterten Art. Die Vorrichtung 1 zur Aufnahme und zur Übertragung eines Alarmes über ein Übertragungsnetz dient der Erkennung und Übertragung eines Alarmes. In diesem Ausführungsbeispiel soll aber auch eine solche Vorrichtung dem Empfang eines Alarmes dienen. Dies bedeutet im einzelnen, daß an der Schnittstelle S zur Anpassung der Vorrichtung an das Übertragungsnetz N Daten von dem Übertragungsnetz N ankommen. Diese werden entsprechend ihres Formates aufgenommen. Das bedeutet, eine Sprachnachricht oder eine Textnachricht wird in der Vorrichtung zwischengespeichert und wiedergegeben. Dies bedeutet für eine Textnachricht, daß diese auf einem Monitor MON (siehe Figur 1) dargestellt wird. Eine Sprachnachricht wird über den bereits erwähnten Lautsprecher Lausgegeben.

Vorzugsweise sollte die Vorrichtung 1 zur Aufnahme und zur Übertragung eines Alarmes so ausgestaltet sein, daß, wenn ein empfangener Alarm nicht direkt entgegengenommen und abgefragt wird, dieser eine automatische Weiterleitung an einen weiteren Empfänger veranlaßt.

Der weitere Empfänger kann z. B. über ein schnurgebundenes Telefon TEL informiert werden, über ein schnurloses Telefon HTL, über einen Pager oder mittels E-Mail über eine Datenverarbeitungsanlage PC.

In einer weiteren Ausgestaltung des Systems zur Aufnahme eines Alarmes kann aber ein Alarm von einer Vorrichtung 1 zur Aufnahme und zur Übertragung eines Alarmes generiert werden, auf das Übertragungsnetz N gegeben werden, von diesem übertragen werden und zu einer Zentrale weitergeleitet werden. Diese Zentrale Z kann beispielsweise eine Zentrale in einer Polizeistation sein. Von der Zentrale aus werden dann entsprechende Maßnahmen eingeleitet. In einer weiteren Ausgestaltung sollte aber auch ein Alarm auf ein herkömmliches Telekommunikationsendgerät übertragen werden können und von diesem als solches erkannt werden.

## Patentansprüche

1. Vorrichtung (1) zur Aufnahme eines Alarmes und zu dessen Übertragung über ein Übertragungsnetz (N)
mit einer Schnittstelle (SS) zum Anschließen von Mitteln (SEN) zur Erkennung des Alarmes, bei der die Schnittstelle (SS) einen erkannten Alarm in ein Alarmsignal umwandelt,
mit Mitteln (CL, DT, LOC) zum Beifügen von Informationen zu dem Alarmsignal,
mit einem Mittel (SYN, REC) zum Umwandeln des Alarmsignals mit der Information in eine Sprachnachricht oder in eine Textnachricht,
Mitteln (A) zum Ausgeben der Sprach- oder Textnachricht über das Übertragungsnetz (N) zu einem Empfänger,
mit einer Schnittstelle (S) zur Anpassung der Vorrichtung (1) an das Übertragungsnetz (N).

2. Vorrichtung nach Anspruch 1, bei der die Mittel zum Beifügen der Information, Informationen über Datum und Uhrzeit und Ort und/oder Dauer und Art des erkannten und aufgenommenen Alarmes beifügen.

3. Vorrichtung nach Anspruch 1 oder 2, bei der die über das Übertragungsnetz übertragenen Textnachrichten Nachrichten in Form von E-Mails sind.

4. Vorrichtung einem der Ansprüche 1 bis 3, bei der in der Vorrichtung Mittel vorgesehen sind, um das in eine Sprach- oder Textnachricht umgewandelte Alarmsignal an vorbestimmte Empfänger zu übertragen.

5. Vorrichtung nach Anspruch 4, bei der der vorbestimmte Empfänger das Alarmsignal über einen Pager oder über ein schnurloses Telefon oder über ein Datenverarbeitungsendgerät oder über ein drahtgebundenes Telefon empfängt.

6. Vorrichtung nach einem der Ansprüche 1 bis 5, bei der die Vorrichtung herkömmliche Telefonfunktionen ausführt.

7. Alarmsystem, mit einer Vorrichtung nach Anspruch 1 zur Aufnahme und zur Übertragung eines Alarmes und mit einem Empfangsgerät zum Empfangen eines übertragenen Alarmsignals.
